# EUROPÄISCHE PATENTSCHRIFT

(11) **EP 2 447 521 B1**
(45) Veröffentlichungstag und Bekanntmachung des Hinweises auf die Patenterteilung: **28.11.2018**
(21) Anmeldenummer: 11187380.8
(22) Anmeldetag: 01.11.2011
(51) Int. Cl.: F03D 1/00, F03D 1/06, B05C 5/02, B29C 70/38, B29D 99/00

(54) **Automatisierungsvorrichtung und Verfahren zum Fertigen eines Rotorblatts einer Windenergieanlage**
Automation device and method for producing a rotor blade for a wind energy assembly
Dispositif d'automatisation et procédé de fabrication d'une pale de rotor d'une éolienne

(30) Priorität: 01.11.2010 DE 102010043201
(43) Veröffentlichungstag der Anmeldung: 02.05.2012
(73) Patentinhaber: Wobben Properties GmbH, 26607 Aurich (DE)
(72) Erfinder: Kamke, Ingo, 26487 Blomberg (DE); Olthoff, Gerhard, 26607 Aurich (DE)
(74) Vertreter: Eisenführ Speiser

(56) Entgegenhaltungen:
- WO-A2-2010/129492
- JP-A- H1 015 456

## Beschreibung

Die vorliegende Erfindung betrifft eine Automatisierungsvorrichtung und ein Verfahren zum Fertigen eines Rotorblatts einer Windenergieanlage.

Großbauteile wie z. B. Rotorblätter einer Windenergieanlage werden häufig in Form einzelner Segmente gefertigt, die zu dem endgültigen Großbauteil zusammengesetzt werden. Auch können Großbauteile mit weiteren Komponenten zusammengefügt werden. Dabei können diese Großbauteile z.B. zur Reduzierung des Eigengewichts bei gleichzeitig hoher Stabilität aus Kunststoff wie z.B. GFK (glasfaserverstärkter Kunststoff) gefertigt werden. Derartige Konstruktionen sind z.B. im Flugzeugbau oder auch in der Fertigung von Rotorblättern für Windenergieanlagen üblich, da hier eine hohe Stabilität bei geringem Eigengewicht vorteilhaft ist. Diese Komponenten der Großbauteile werden dabei z.B. durch das Einbringen von GFK-Matten in Schalen oder Formen und Verkleben dieser miteinander hergestellt.

Das Zusammenfügen der einzelnen Segmente oder Komponenten der Großbauteile kann z.B. durch das Verkleben dieser Segmente oder Komponenten geschehen. Dabei bietet sich das Verkleben mit z.B. Kunststoffharzen gerade bei Großbauteilen aus GFK an, da durch die Verbindung verschiedener Kunststoffe miteinander eine sehr gute Klebewirkung erzielt werden kann. Auch können die Oberflächen der Klebenähte einfach nachbearbeitet werden, um z.B. überschüssige Klebereste an der Außenseite zu entfernen.

Hierbei ist es üblich, das Klebemittel von Hand aufzutragen. Hierzu wird das Klebemittel an Zapfstationen in Eimer abgefüllt und zu dem Bereich des Großbauteils getragen, in dem es aufzubringen ist. Das Auftragen erfolgt von Hand mittels handelsüblicher Spachtel oder ähnlicher Werkzeuge und Hilfsmittel, wie sie z.B. im Baumarkt erhältlich sind.

Nachteilig ist hierbei, dass das Klebemittel vom Zeitpunkt des Abzapfens an bis zum Zusammenführen der mit Klebemittel versehen Segmente der Umgebungsluft ausgesetzt ist und daher bereits vor dem Zusammenführen der mit Klebemittel versehen Segmente trocken und dadurch seine Klebewirkung zumindest teilweise verlieren kann. Hierdurch kann die Klebewirkung zwischen den verklebten Segmenten des Großbauteils beeinträchtigt werden.

Nachteilig ist ferner, dass durch das manuelle Auftragen mittels Spachtel oder dergleichen Lufteinschlüsse in dem aufgetragenen Klebemittel entstehen können, die ebenfalls die Klebewirkung zwischen den verklebten Segmenten des Großbauteits beeinträchtigen können.

Nachteilig ist auch, dass der manuelle Auftrag des Klebemittels ungleichmäßig ausfallen kann. So kann die Klebekante nicht in ihrer gesamten Breite mit Klebemittel bestrichen werden, so dass dieser Teil der Klebekante nach dem Zusammenführen der Segmente des Großbauteils keine Klebewirkung hat, d.h. dass in diesem Bereich keine Kräfte zwischen den Segmenten wirken und damit der verklebte Teil der Klebekante diese Kräfte mit aufnehmen muss, d.h. stärker belastet wird als es vorgesehen ist. Auch kann die Höhe des Klebeauftrags derart ungleichmäßig ausfallen, dass in einigen Bereichen sehr viel Klebemittel durch das Zusammenfügen der Segmente aus der Klebekante nach Innen und Außen herausgepresst wird. Dieses überschüssige Klebemittel muss dann zum Erreichen einer glatten Oberfläche, die bei den meisten Großbauteilen aus funktionellen oder ästhetischen Gründen gefordert wird, z.B. manuell entfernt werden. Ferner wird hierbei Klebemittel verschwendet.

Nachteilig ist weiterhin, dass das manuelle Auftragen des Klebemittels einen hohen personellen Aufwand erfordert, viel Zeit kostet und damit auch zu hohen Kosten des Großbauteils führt.

Als Stand der Technik wird auf die Dokumente DE 297 05 782 U1, US 7 524 176 B2, AT 001 427 U1, JP 10 057 865 A, JP 10 015 456 A, DE 20 2007 007 037 U1 und WO 2008/071 329 A1 verwiesen. Aus Dokument WO 2010/129492 ist eine Automatisierungsvorrichtung mit einer Auftragsvorrichtung zum Auftragen von Klebemittel bekannt. Die Automatisierungsvorrichtung dieses Dokuments ist eine Automatisierungsvorrichtung in Portalbauweise. Dieses Dokument ist Stand der Technik gemäß Artikel 54(3) EPÜ.

Der Erfindung liegt daher die Aufgabe zugrunde, eine Vorrichtung und Verfahren zum Auftragen von Klebemittel zu schaffen, um die zuvor genannten Nachteile zumindest teilweise zu überwinden.

Erfindungsgemäß wird diese Aufgabe durch eine Automatisierungsvorrichtung gemäß Anspruch 1 sowie ein Verfahren gemäß Anspruch 10 gelöst. Vorteilhafte Weiterbildungen sind in den Unteransprüchen beschrieben.

Somit wird erfindungsgemäß eine Automatisierungsvorrichtung zum Fertigen eines Rotorblatts einer Windenergieanlage vorgesehen. Die Automatisierungsvorrichtung weist eine Auftragsvorrichtung zum Auftragen von Klebemittel mit einer Auftragseinheit auf, welche eingerichtet ist, über eine mit Klebemittel zu versehende Oberfläche einer Rotorblatthälfte geführt zu werden und bei der Bewegung auf der Oberfläche das Klebemittel aufzutragen. Die Vorrichtung weist eine Zuführeinheit auf, welche eingerichtet ist, Klebemittel in einen Raum zuzuführen, der im Wesentlichen durch die Auftragseinheit und die mit Klebemittel zu versehende Oberfläche begrenzt wird. Die Auftragseinheit weist eine Seite mit einer Öffnung auf und die Öffnung ist derart ausgestaltet, um dem auf der Oberfläche aufgetragenen Klebemittel eine vorbestimmte Kontur zu geben. Die Automatisierungsvorrichtung weist ferner Vorrichtungen zum Positionieren und/oder Orientieren der Vorrichtung zum Auftragen von Klebemittel zu der mit Klebemittel zu versehenden Oberfläche auf. Die Automatisierungsvorrichtung ist als ein Portalroboter oder eine Automatisierungsvorrichtung in Portalbauweise ausgestaltet, welche dazu eingerichtet ist, in Längsrichtung über die Rotorblatthälfte zu verfahren.

Durch die Führung der Vorrichtung zum Auftragen von Klebemittel durch eine Automatisierungsvorrichtung anstatt einer manuellen Handhabung durch einen Bediener wird der Mitarbeiteraufwand reduziert, der zum Auftragen des Klebemittels nötig ist. Ferner kann durch die Automation dieses Prozessschrittes der Produktionszeit verkürzt werden, so dass geringere Kosten entstehen und in der gleichen Zeit mehr Bauteile mit Klebemittel versehen und produziert werden können. Damit kann auch schneller auf neue Aufträge reagiert werden.

Dabei ist die Automatisierung des Auftragens von Klebemittel insbesondere bei sehr langen Bauteilen wie den Rotorblatthälften von Rotorblättern von Windenergieanlagen vorteilhaft, da hier durch die Mitarbeiter der Produktion große Wege zurückgelegt werden müssen, um alle Klebekanten manuell mit Klebemittel zu versehen. Auch können hier bisher keine schnelltrocknenden Klebemittel eingesetzt werden, da diese aufgrund des hohen zeitlichen Aufwands zum Auftragen bereits teilweise getrocknet und zumindest nicht mehr vollständig klebefähig wären, wenn das Auftragen vollständig durchgeführt wäre. Somit ist die Auswahl an Klebemittel für dieses Produkt durch den bisher üblichen Auftragsprozess eingeschränkt. Auch ist eine möglichst zügige Produktion der Rotorblätter der Windenergieanlagen erforderlich, um den stetig steigenden Bedarf an regenerativer Energie zu decken.

Somit kann durch das automatisierte Auftragen von Klebemittel auf die Rotorblatthälften von Rotorblättern von Windenergieanlagen deren Produktionszeit verkürzt und hierdurch Kosten reduziert werden. Auch können schneller trocknende Klebemittel als bisher eingesetzt werden. Ferner kann die Qualität der Klebeverbindung durch einen gleichmäßigen und blasenfreien, d.h. von Lufteinschlüssen freien Auftrag des Klebemittels gesteigert werden.

Durch diese erfindungsgemäße Vorrichtung wird das Klebemittel auf die mit Klebemittel zu versehende Oberfläche, insbesondere eine Klebekante, aufgetragen. Dies geschieht durch das Zuführen des Klebemittels aus der Zuführung in den Bereich zwischen Oberfläche und Auftragseinheit, d.h. das Klebemittel wird so zwischen Auftragseinheit und Oberfläche zugeführt, dass es diesen Bereich zumindest so weit ausfüllt, dass über die gesamte Breite der mit Klebemittel zu versehenden Oberfläche auf dieser Klebemittel aufgetragen wird. Die Breite der mit Klebemittel zu versehenden Oberfläche ist dabei die Ausdehnung der Oberfläche im Wesentlichen senkrecht zur Auftragsrichtung. In anderen Worten wird das Klebemittel über die Oberfläche so aufgetragen, dass sich das Klebemittel seitlich, d.h. senkrecht zur Auftragsrichtung, bis zur Begrenzung der Oberfläche verteilt, wobei die seitliche Begrenzung der mit Klebemittel zu versehenden Oberfläche durch das Bauteil, welches die mit Klebemittel zu versehende Oberfläche aufweist, andere Bauteile oder die Form der Auftragseinheit gebildet werden kann.

Dabei kann sich das Klebemittel in der Auftragsrichtung über den Bereich der mit Klebemittel zu versehenden Oberfläche ausbreiten, damit überschüssig aufgetragenes Klebemittel nicht in die Zuführung des Klebemittels zurückstaut.

Auf der Seite der Auftragseinheit, die entgegen der Auftragsrichtung angeordnet ist, weist die Auftragseinheit eine Öffnung auf, durch die Klebemittel aus der Auftragseinheit austreten kann. Wird nun der Bereich zwischen Auftragseinheit und Oberfläche mit Klebemittel gefüllt und die Auftragseinheit in Auftragsrichtung geführt, d.h. bewegt, so bildet sich hinter der Auftragseinheit, d.h. in dem Bereich der Oberfläche, über den die Auftragseinheit hinweg geführt wurde, eine Klebemittelschicht aus, die auch als Kleberaupe bezeichnet wird. Diese Kleberaupe bildet sich entsprechend der Kontur der Öffnung der Auftragseinheit auf der Oberfläche aus. Da die Kontur der Öffnung der Auftragseinheit während des Auftragens unverändert bleibt und die Auftragseinheit über die Oberfläche geführt wird, bildet sich bei entsprechender Zuführungsgeschwindigkeit des Klebemittels und Geschwindigkeit der Auftragsbewegung eine gleichbleibende, homogene Kleberaupe auf der Oberfläche aus.

Alternativ kann die Auftragseinheit auch derart ausgestaltet sein, dass sich die Kontur der Öffnung der Auftragseinheit während des Auftragsvorgangs verstellen lässt. Dies kann durch Aktoren geschehen, die die Öffnung der Auftragseinheit z.B. in der Breite verstellen können. Hierdurch kann die Breite der sich ausbildenden Kleberaupe einer sich in der Breite verändernden Oberfläche angepasst werden. Auch kann die Öffnung der Auftragseinheit durch Aktoren in ihrer Kontur verstellt werden, z.B. durch ein Verdrehen der seitlichen Kanten der Öffnung, um so aus einer rechteckigen Kontur einer Kleberaupe eine trapezförmige oder dreieckige Kontur zu erzeugen. Auf diese Weise können auch Kleberaupen aufgetragen werden, deren Kontur während des Auftragsvorgangs gezielt verändert wird.

Vorteilhaft ist dabei, dass durch die erfindungsgemäße Vorrichtung zum Auftragen von Klebemittel ein gleichmäßiger homogener Auftrag, d.h. eine gleichmäßige Dicke der Klebeschicht, erreicht werden kann. Hierdurch kann über die gesamte mit Klebemittel zu versehende Oberfläche auch eine entsprechende gleichmäßige Klebewirkung bei dem Zusammenführen der zu verklebenden Oberfläche erreicht werden.

Vorteilhaft ist auch, dass durch das gleichmäßige Auftragen weniger Klebemittel verwendet wird, d.h. weniger Klebemittel verschwendet wird, da der Auftrag des Klebemittels so erfolgen kann, dass möglichst wenig Klebemittel beim Zusammenführen der zu verklebenden Oberfläche über die Fügestellen, d.h. Klebenaht, hinaustritt. So kann das aufgetragene Klebemittel optimal ausgenutzt werden. Ferner wird der Aufwand der Nachbearbeitung der Klebenaht reduziert, da weniger aus der Fügestelle ausgetretenes Klebemittel wieder entfernt werden muss. Hierdurch können nicht nur Materialkosten durch weniger verbrauchtes Klebemittel reduziert werden, sondern auch Materialkosten und Zeit für den reduzierten Nachbearbeitungsaufwand der Fügestellen.

Vorteilhaft ist weiterhin, dass durch das gleichmäßige Auftragen auch Lufteinschlüsse in dem aufgetragenen Klebemittel reduziert werden können. Dies bedeutet, dass das Klebemittel möglichst blasenfrei aufgetragen werden kann. Dabei sind Lufteinschlüsse in dem aufgetragenen Klebemittel nicht erwünscht, da sie die Qualität der Klebung, d.h. deren Stabilität und Belastbarkeit, reduzieren. Somit kann durch die Reduzierung von Lufteinschlüssen die Qualität der Klebung gesteigert werden.

Gemäß einem weiteren Aspekt der Erfindung ist die Seite mit der Öffnung eingerichtet, ausgewechselt zu werden. Auf diese Weise können verschiedene Konturen von Kleberaupen mit der erfindungsgemäßen Vorrichtung zum Auftragen von Klebemittel aufgetragen werden. Die jeweilige Kontur der aufgetragenen Kleberaupe entspricht dabei jeweils der entsprechenden Kontur der Öffnung. So können Kleberaupen in z.B. rechteckigen, dreieckigen, halbrunden oder trapezförmigen Konturen in verschiedenen Höhen erzeugt werden. Dies ist vorteilhaft, da je nach zu verklebenden Bauteilen und deren mit Klebemittel zu versehenden Oberflächen eine entsprechend ausgebildete Kleberaupe aufgetragen werden kann, die für diese Oberflächen einen bestmöglichen Auftrag des Klebemittels und damit auch eine bestmögliche Klebewirkung erzeugt. Die Seite der Öffnung kann dabei manuell ausgewechselt werden. Ferner können auch mehrere Seiten mit identisch geschnittenen Öffnungen verwendet werden, die nach jedem Auftragen oder nach mehreren Aufträgen ausgewechselt werden, um die zuvor verwendete Seite zu reinigen oder zu warten.

Gemäß einem weiteren Aspekt der Erfindung ist die Öffnung der Seite derart ausgestaltet, dass durch die Kontur der Öffnung der Seite die Kontur, insbesondere Höhe, des aufgetragenen Klebemittels bestimmt wird. Durch die Kontur der Öffnung kann somit die Kontur des aufgetragenen Klebemittels, d.h. der Kleberaupe, bestimmt werden. Dabei kann über die Kontur der Öffnung insbesondere der Abstand zwischen der mit Klebemittel zu versehenden Oberfläche und der Auftragseinheit vorgegeben und damit die Klebemitteldicke bestimmt werden.

Gemäß einem weiteren Aspekt der Erfindung weist die Vorrichtung zum Auftragen von Klebemittel eine Klebemitteleinheit auf, welche eingerichtet ist, das Klebemittel der Auftragseinheit zuzuführen. Somit wird das Klebemittel direkt aus der Klebemitteleinheit, weiche ein Klebemittelspeicher oder -reservoir wie eine Kartusche, ein Fass, ein Tank oder dergleichen sein kann, der Auftragseinheit zugeführt und dort über die Zuführung in den Raum, der im Wesentlichen durch die Auftragseinheit und die mit Klebemittel zu versehende Oberfläche begrenzt wird, ausgegeben. Somit kann eine kontinuierliche Zuführung von Klebemittel gewährleistet werden, d.h. eine Kleberaupe kann auch über eine große Länge ununterbrochen aufgetragen werden. Dies ist vorteilhaft, da durch eine Unterbrechung der Kleberaupe, z.B. zum Austausch einer leeren Klebemittelkartusche gegen eine volle, und einem erneuten Ansetzen des Auftragens die Klebeeigenschaften an der Unterbrechungsstelle von denen der übrigen Kleberaupe abweichen können. Ferner können gegenüber den bekannten Auftragsverfahren, bei den das Klebemittel lange der Umgebungsluft ausgesetzt ist, andere Klebemittel verwendet werden, die z.B. bei Luftkontakt schneller erhärten, da das Klebemittel bei der erfindungsgemäßen Auftragseinheit erst direkt beim Auftragen auf der mit Klebemittel zu versehenden Oberfläche mit der Umgebungsluft in Kontakt kommt, weil es vorher direkt von der Klebemitteleinheit zur Zuführung geleitet wird.

Gemäß einem weiteren Aspekt der Erfindung ist die Klebemitteleinheit eingerichtet, die Menge des zugeführten Klebemittels pro Zeit vorzugeben. Auf diese Weise kann die Menge an zugeführtem Klebemittel, z.B. durch eine Vorgabe von Litern pro Zeiteinheit, an die Geschwindigkeit des Auftragens angepasst werden, um einen optimalen Auftrag zu erreichen, d.h. einen vollständigen und ununterbrochen Auftrag zu erreichen, ohne dass überschüssig zugeführtes Klebemittel in Auftragsrichtung oder seitlich austritt, verschwendet wird und nach dem Verkleben der Bauteile entfernt werden muss.

Gemäß einem weiteren Aspekt weist die Vorrichtung zum Auftragen von Klebemittel eine Sensoreinheit auf, die eingerichtet ist, die mit Klebemittel zu versehende Oberfläche zu erkennen. Hierdurch kann das optimale Folgen der mit Klebemittel zu versehenden Oberfläche unterstützt werden. Wird dabei die erfindungsgemäße Vorrichtung durch einen Bediener geführt, kann die mit Klebemittel zu versehende Oberfläche während der Auftragsbewegung durch die Auftragseinheit verborgen sein. Daher ist es vorteilhaft, dass die Vorrichtung die mit Klebemittel zu versehende Oberfläche erkennen und diesbezüglich eine Rückmeldung an den Bediener geben kann. So kann über akustische oder optische Ausgaben mitgeteilt werden, dass die Auftragsbewegung seitlich oder in der Höhe, d.h. im Abstand zur Oberfläche, durch den Bediener zu korrigieren ist. Wird die erfindungsgemäße Vorrichtung durch eine Automatisierungsanlage geführt, so kann diese Rückmeldung an die Steuerung der Automatisierungsanlage erfolgen, die dann die Bahnvorgabe entsprechend korrigieren kann.

Auch können, gerade bei einer automatisierten Auftragsbewegung, Hindernisse wie z.B. Stege oder dergleichen erkannt werden, an denen die Auftragsbewegung zu unterbrechen ist oder über die die Auftragseinheit hinüberzuheben ist.

Ferner treten durch das Auftragen des Klebemittels Kräfte zwischen der mit Klebemittel zu versehenden Oberfläche und der Auftragseinheit auf, so dass die Oberfläche durch die Auftragseinheit aus ihrer Lage weggedrückt werden kann, falls die Oberfläche nicht ausreichend gehalten wird. Somit können auch durch den Auftragsprozess bedingte Abweichungen von der Soll-Lage der Oberfläche durch die Sensoreinheit erkannt und an den Bediener oder die Automatisierungsanlage ausgegeben werden, um eine Korrektur der Auftragsbewegung zu veranlassen.

Auch können durch eine große Automatisierungsanlage Oberflächen mehrerer Bauteile abgefahren und auf diesen Oberflächen Klebemittel aufgetragen werden. Hierbei kann es zu Bahnabweichungen zwischen den einzelnen Produktionsstationen kommen, so dass ein Korrigieren von Positionsabweichungen zwischen den gleichen Bahnen verschiedener Produktionsstationen erforderlich ist, welches durch ein Erkennen der jeweiligen abzufahrenden Bahnkontur mittels der Sensoreinheit ermöglicht werden kann.

Erfindungsgemäß weist die Sensoreinheit Mittel auf, die seitlichen Begrenzungen der mit Klebemittel zu versehenden Oberfläche zu erkennen. Durch diese Mittel wird die seitliche Positionierung der Auftragseinheit gegenüber der mit Klebemittel zu versehenden Oberfläche überprüft. Hierzu können z.B. Lichttaster eingesetzt werden. Diese können zu mehreren nebeneinander quer zur Auftragsrichtung vorgesehen sein und zwei unterschiedliche Signale ausgeben, je nachdem, ob das von ihnen senkrecht zur Auftragsrichtung in Richtung der Oberfläche ausgesandte Lichtsignal wieder von ihnen empfangen wird oder nicht. In anderen Worten geben die Lichttaster jeweils ein Lichtsignal in Richtung der zu erkennenden Oberfläche aus, dessen Reflexion sie erkennen können. Wird das ausgesandte Lichtsignal von der Oberfläche reflektiert und von dem entsprechenden Lichttaster wieder empfangen, so gibt dieser ein Signal aus, dass er eine Reflexion seines ausgesandten Lichtsignals empfangen hat. Trifft das ausgesandte Lichtsignal nicht auf die zu erkennende Oberfläche, so gibt der Lichttaster ein entsprechendes zweites Signal aus, dass er keine Reflexion empfangen hat. Werden nun mehrere derartige Lichtaster nebeneinander über die Breite der zu erkennenden Oberfläche vorgesehen, so können durch diese die äußeren seitlichen Kanten der Oberfläche dadurch erkannt werden, dass falls ein äußerer Lichttaster statt keiner Reflexion plötzlich eine Reflexion durch die Oberfläche meldet, die Auftragsbewegung zu weit seitlich in diese Richtung führt und entsprechend so seitlich in die entgegengesetzte Richtung korrigiert werden muss, dass dieser Lichttaster erneut keine Reflexion feststellt.

Alternativ kann die seitliche Begrenzung auch z.B. mittels eines mechanischen berührenden Fingers ausgebildet sein, d.h. eines mechanischen Tasters, der zwischen dem Eingedrückt-Sein mit Kontakt mit einer Oberfläche und dem Nicht-Eingedrückt-Sein ohne einen solchen Kontakt unterscheiden kann. Die Abfrage eines derartigen mechanischen berührenden Fingers erfolgt über sog. Initiatoren, d.h. berührungslose Messsensoren. Alternativ kann ferner eine Weg-Mess-Einheit zur Erfassung der seitlichen Begrenzung eingesetzt werden.

Gemäß einem weiteren Aspekt der Erfindung weist die Sensoreinheit Mittel auf, den Abstand zwischen der Auftragseinheit und der mit Klebemittel zu versehenden Oberfläche zu erkennen. Hierdurch kann der Abstand gemessen werden. Dies kann z.B. durch einen oder mehrere Ultraschall-Distanzsensoren erfolgen, die über die Laufzeit eines ausgesandten Ultraschallsignals bis zu dem Empfangen seiner Reflexion an der mit Klebemittel zu versehenden Oberfläche den Abstand zwischen Auftragseinheit und Oberfläche bestimmen können. Durch diese Messung können auch Unebenheiten der Oberfläche erkannt werden.

Gemäß einem weiteren Aspekt der Erfindung wird die Trajektorie der Auftragseinheit über die mit Klebemittel zu versehende Oberfläche und die Menge des zugeführten Klebemittels pro Zeit derart vorgesehen, eine vorbestimmte Menge von Klebemittel auf jeden Abschnitt der mit Klebemittel zu versehenden Oberfläche aufzutragen. Auf diese Weise kann ein optimaler Auftrag der Kleberaupe erfolgen, da die Automatisierungsvorrichtung die zugeführte Klebemittelmenge und die Geschwindigkeit der Auftragsbewegung steuern und auf einander abstimmen kann. Dabei kann die Automatisierungsvorrichtung einerseits bei konstanter Fördermenge des Klebemittels die Auftragsgeschwindigkeit variieren oder andererseits bei konstanter Auftragsgeschwindigkeit die Zuführungsmenge des Klebemittels variieren. Auch kann über diese Einflussmöglichkeiten auch bewusst ein unvollständiger Klebemittelauftrag erzeugt werden, sollte dies erwünscht sein, z.B. an Kanten, Ecken oder Knicken der Oberfläche.

Hierbei ist es vorteilhaft, wenn die Quelle des Klebemittels, aus der das Klebemittel der Auftragseinheit zugeführt wird, mit der Automatisierungsvorrichtung mitgeführt wird, um die Zuführungsmittel wie Schläuche oder dergleichen möglichst kurz zu halten. So können einerseits Kosten für die Zuführungsmittel reduziert werden. Ferner kann schneller durch eine Veränderung der Förderleistung an der Quelle des Klebemittels ein Einfluss auf die durch die Auftragseinheit ausgegebene Klebemittelmenge genommen werden.

Dabei ist unter dem Begriff Trajektorie die Vorgabe einer Bahnkontur, d.h. einer Bewegung im Raum, in Abhängigkeit der Zeit zu verstehen, d.h. durch eine Trajektorie werden Punkte im Raum zu verschiedenen Zeitpunkten und damit auch die Geschwindigkeit vorgegeben, mit der die Bewegung von einem Punkt zum nächsten zu erfolgen hat.

Gemäß einem weiteren Aspekt der Erfindung wird die Menge des auf jeden Abschnitt der mit Klebemittel zu versehenden Oberfläche aufgetragenen Klebemittels gespeichert. Hierdurch kann die Qualität eines Auftragsprozesses für das entsprechende Bauteil nachvollzogen und protokolliert werden. Derartige Angaben sind für die Qualitätskontrolle relevant und können auch im Falle einer Gewährleistung von Bedeutung sein, falls beim Versagen einer Klebung die Gründe des Versagens im Nachhinein ermittelt werden sollen. Hier kann beispielsweise durch das Protokoll des Auftragens ein Nachweis geführt werden, dass eine Klebung trotz ordnungsgemäßem Klebemittelauftrags versagt hat.

Gemäß einem weiteren Aspekt der Erfindung ist die Automatisierungsvorrichtung eingerichtet, auf einer Mehrzahl von Objekten, die jeweils wenigstens eine mit Klebemittel zu versehende Oberfläche aufweisen, Klebemittel aufzutragen. Auf diese Weise kann die Automatisierungsvorrichtung, welche einen nicht unerheblichen Investitions- und Unterhaltungsaufwand erfordern kann, besser ausgelastet und damit die Kosten pro geklebtem Bauteil reduziert werden, indem mehrere Stationen vorgesehen werden, an denen Klebemittel durch die selbe Automatisierungsvorrichtung aufgetragen werden kann. Dabei kann die Planung der Auftragsbewegung, d.h. die Trajektorienplanung, derart erfolgen, dass die Bewegung zeitlich über alle Stationen hinweg optimiert wird.

Erfindungsgemäß ist die Automatisierungsvorrichtung ein Portalroboter oder eine Automatisierungsvorrichtung in Portalbauweise. Derartige Automatisierungsanlagen eignen sich insbesondere für lange und flache Objekte, über die sie hinwegfahren können und die sie im Wesentlichen von oben, d.h. entgegen der Schwerkraftrichtung, bearbeiten können. Damit eignet sich eine Automatisierungsvorrichtung in Portalbauweise oder ein Portalroboter für das Auftragen von Klebemittel, da dieses zumindest eine gewisse Fähigkeit zum Fließen hat und somit aufgrund der Schwerkraft von Oberflächen abfließen könnte, die nicht im Wesentlichen senkrecht zur Schwerkraftrichtung ausgerichtet sind bzw. die nicht in Schwerkraftrichtung unterhalb des aufgetragenen Klebemittels angeordnet sind. In anderen Worten ist gerade für den Prozess des Klebemittelauftrags eine Automatisierungsvorrichtung in Portalbauweise oder ein Portalroboter besonders geeignet, da die mit Klebemittel zu versehenden Oberflächen aufgrund der Prozesse im Wesentlichen nach Oben, d.h. entgegen der Schwerkraftrichtung, ausgerichtet sind und eine Automatisierungsvorrichtung in Portalbauweise oder ein Portalroboter dazu ausgelegt ist, Bauteile im Wesentlichen von Oben zu bearbeiten.

Ausführungsbeispiele und Vorteile der Erfindung werden nachstehend unter Bezugnahme auf folgende Figuren näher erläutert:
- Fig. 1: zeigt eine perspektivische Ansicht einer Auftragseinheit beim Einsatz,
- Fig. 2: zeigt eine perspektivische Darstellung einer automatisierten Auftragseinheit gemäß einem ersten Ausführungsbeispiel,
- Fig. 3: zeigt eine perspektivische Darstellung einer automatisierten Auftragseinheit gemäß einem zweiten Ausführungsbeispiel,
- Fig. 4: zeigt eine seitliche Darstellung eines Automatisierungssystems,
- Fig. 5: zeigt eine perspektivische Darstellung des Automatisierungssystems der Fig. 4,
- Fig. 6: zeigt eine weitere perspektivische Darstellung des Automatisierungssystems der Fig. 4, und
- Fig. 7: zeigt eine seitliche Darstellung des Automatisierungssystems der Fig. 4.

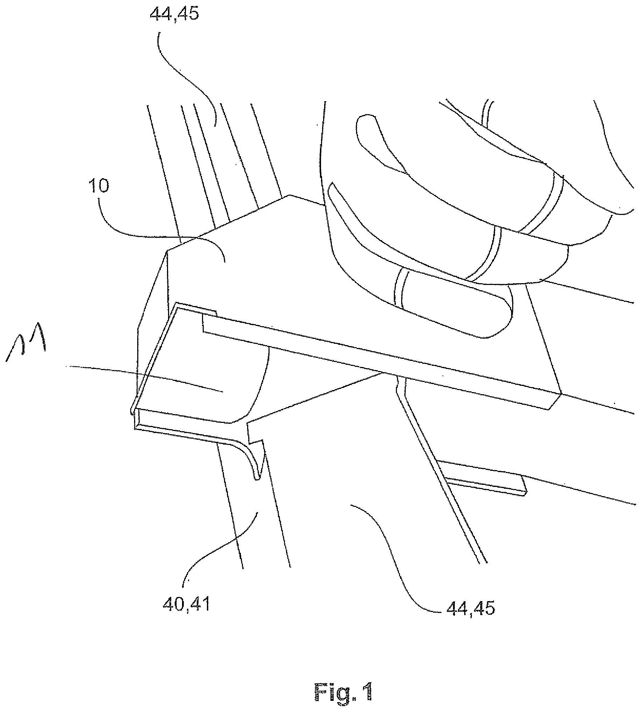

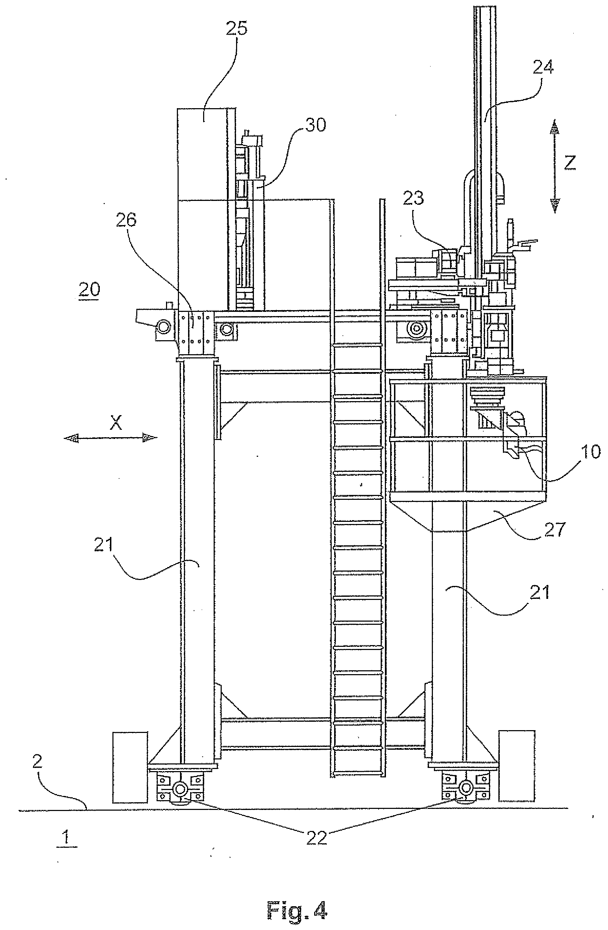

Fig. 1 zeigt eine perspektivische Ansicht einer Auftragseinheit beim Einsatz. Die Auftragseinheit 10 weist ein Auftragsprofil 11 auf, welches als Öffnung der Seite der Auftragseinheit 10 ausgebildet ist, welche über eine Klebekante 44, 45 geführt wird und welche entgegen der Auftragsrichtung angeordnet ist. In dieser Darstellung erfolgt der Einsatz der Auftragseinheit 10 manuell, d.h. die Auftragseinheit 10 wird von Hand von einem Bediener über die Klebekante 44, 45 geführt. Die Klebekante 44, 45 ist hierbei die Endkante 44 oder die Nasenkante 45 eines Rotorblattdruckseite 40 oder einer Rotorblattsaugseite 41 zweier Rotorblatthälften eines Rotorblatts einer Windenergieanlage (vgl. Fig. 4 bis 7). Dabei wird das Klebemittel in der Darstellung der Fig. 1 von Vorne nach Hinten in der Perspektive der Darstellung aufgetragen, d.h. im vorderen Teil der Klebekante 44, 45 ist das Klebemittel bereits durch die Auftragseinheit 10 aufgetragen worden, im hinteren Teil der Klebekante 44, 45 ist dies noch nicht der Fall.

Die Auftragseinheit 10 weist dabei eine Zuführung (nicht dargestellt) auf, über die das Klebemittel der Auftragseinheit 10 zugeführt wird. Dabei wird das Klebemittel in den Bereich zwischen einer Innenseite oder Innenfläche der Auftragseinheit 10 und der zu beschichtenden Klebekante 44, 45 ausgegeben. Das aufgetragene Klebemittel wird dann durch die Bewegung der Auftragseinheit 10 entlang der Klebekante 44, 45 durch das Auftragsprofil 11 entsprechend der Kontur des Auftragsprofils 11 auf der Klebekante 44, 45 geformt. Auch wird die Höhe des aufgetragenen Klebemittels durch die Kontur des Auftragsprofils 11 beeinflusst werden. Hierdurch wird auf der Klebekante 44, 45 eine sogenannte Kleberaupe ausgebildet. In diesem Fall wird durch ein dreieckiges Auftragsprofil 11 auf der ebenen Klebekante 44, 45 eine dreieckige Kleberaupe ausgebildet. Das Auftragsprofil 11 kann dabei ausgewechselt werden, um unterschiedliche Konturen von Kleberaupen zu erzeugen. Ferner kann die Menge an zugeführtem Klebemittel verändert werden, um zusammen mit der Geschwindigkeit der Auftragsbewegung durch den Bediener und der Kontur des Auftragsprofils 11 die Höhe der Kleberaupe zu bestimmen.

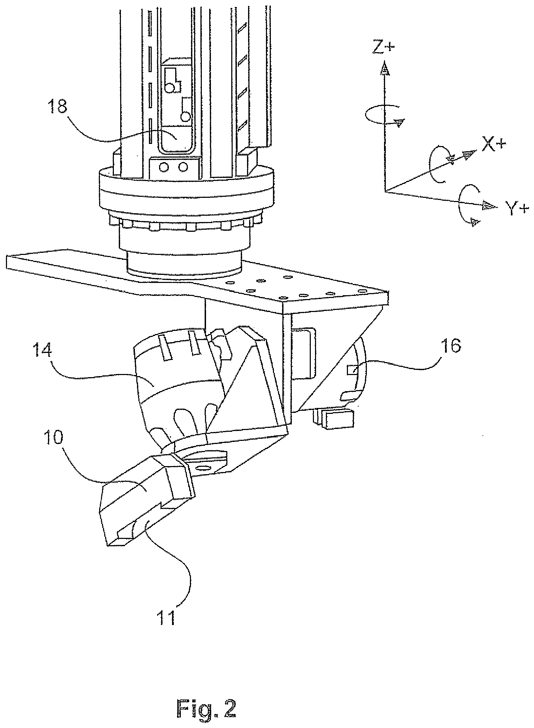

Fig. 2 zeigt eine perspektivische Darstellung einer automatisierten Auftragseinheit 10 gemäß einem ersten Ausführungsbeispiel. In diesem Fall wird die Auftragseinheit 10 durch eine Anordnung von drei Rotationsachsen gegenüber der Klebekante 44, 45 orientiert. Hierzu wird die Auftragseinheit 10 durch einen ersten Rotationsantrieb 14, einen zweiten Rotationsantrieb 16 und einen dritten Rotationsantrieb 18 um die kartesischen Achsen X, Y und Z gedreht. Diese drei Rotationsantriebe 14, 16, 18 bilden eine Hand einer Automatisierungsanlage, welche durch weitere Antriebe, wie z.B. die X-, Y- und Z-Achsen eines Portalroboters, in den drei kartesischen Achsen verfahren werden kann (vgl. Fig. 4 bis 7). Alternativ können diese sechs Freiheitsgrade auch durch andere Kinematiken zur Verfügung gestellt werden. So sind diese auch bei einem 6-Achs-Knickarmroboter vorhanden, der sechs Rotationsachsen ausweist.

Durch die sechs Freiheitsgrade in allen kartesischen Achsen kann die Auftragseinheit 10 in allen sechs Raumrichtungen gegenüber der Klebekante 44, 45 positioniert und orientiert werden, so dass die Auftragseinheit 10 anstelle einer manuellen Bedienung durch die Automatisierungsanlage über die Klebekante 44, 45 geführt werden kann, um dort eine Kleberaupe aufzutragen. Dabei können durch die Automatisierungsanlage die Zuführgeschwindigkeit des Klebemittels, d.h. die Menge des ausgegebenen Klebemittels z.B. in Form einer Berechnung von Liter pro Minute, und die Verfahrgeschwindigkeit der Auftragseinheit 10 über der Klebekante 44, 45 unter Berücksichtigung der Kontur des Auftragsprofils 11 berechnet und gesteuert werden. Aufgrund der Koordinatentransformation zwischen den Achsen der Automatisierungsanlage und der Bahnkontur der zu beschichtenden Klebekante 44, 45 kann diese Berechnung automatisiert durch die Vorgabe der Bahnkontur und der jeweiligen Dicke des aufzutragenden Klebemittels, d.h. der Höhe der Kleberaupe, durchgeführt werden.

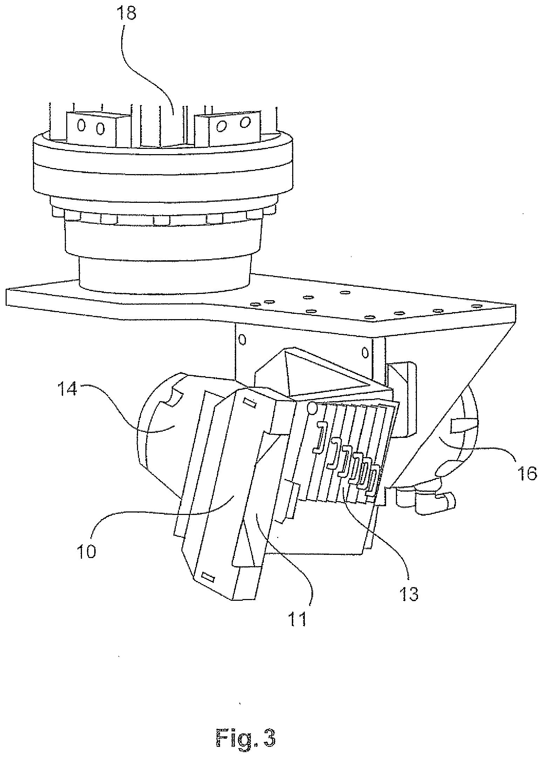

Fig. 3 zeigt eine perspektivische Darstellung einer automatisierten Auftragseinheit 10 gemäß einem zweiten Ausführungsbeispiel. Die Auftragseinheit gemäß dem zweiten Ausführungsbeispiel kann auf der Auftragseinheit gemäß dem ersten Ausführungsbeispiel beruhen. Neben den in Fig. 2 dargestellten Elementen (wie z. B. die drei Rotationsantriebe 14, 16, 18) gemäß dem ersten Ausführungsbeispiel weist die automatisierte Auftragseinheit 10 gemäß dem zweiten Ausführungsbeispiel zusätzlich eine Sensoreinheit 13 auf. Diese ist so an der Auftragseinheit 10 vorgesehen, dass sie die Klebekante 44, 45 vor dem Beschichten mit Klebemittel erfasst. In anderen Worten ist die Sensoreinheit 13 vor dem Auftragsprofil 12 in der Verfahrensrichtung vorgesehen.

Die Sensoreinheit 13 dient dem Erfassen der zu beschichtenden Klebekante 44, 45. Hierdurch sollen Abweichungen in der Vorgabe der abzufahrenden Bahnkontur ausgeglichen werden können, da die Steuerung der Automatisierungsanlage der vorgegeben Soll-Bahnkontur folgt, diese jedoch von der ist-Bahnkontur abweichen kann. Diese Abweichung kann aufgrund der Messergebnisse der Sensoreinheit 13 korrigiert werden. So erfolgt in diesem zweiten Ausführungsbeispiel eine Grobpositionierung und -orientierung der Auftragseinheit 10 durch die Vorgabe der abzufahrenden Bahnkontur, während die Feinpositionierung und -orientierung aufgrund der Messergebnisse der Sensoreinheit 13 erfolgt. So kann die abzufahrende Bahnkontur stets den realen Umständen der Klebekante 44, 45 angepasst werden und eine entsprechend genauere Ausführung der gewünschten Kleberaupe erreicht werden, als dies ohne die Sensoreinheit 13 möglich ist.

Fig. 4 zeigt eine seitliche Darstellung eines Automatisierungssystems gemäß der Erfindung. Dieses Automatisierungssystem stellt eine Automatisierungsvorrichtung dar und ist als Portalsystem ausgebildet und weist eine Y-Brücke 20 auf, die über einem Untergrund 1 verfahren werden kann. Die Y-Brücke 20 weist ein Podest 26 auf, welches über eine Stützeinheit 21 vom Untergrund 1 beabstandet ist. Die Stützeinheit 21 weist Rolleneinheiten 22 auf, die auf einer Bodenfahrschiene 2, die im Untergrund 1 eingelassen oder auf dem Untergrund 1 montiert ist, in einer Richtung X verfahren werden können.

Auf dem Podest 26 sind Schaltschränke 25 zur Steuerung und elektrischen Versorgung der Automatisierungsanlage sowie eine Klebeanlage 30 vorgesehen, um die Auftragseinheit 10 mit Klebemittel zu versorgen. Dabei kann die Steuerung der Automatisierungsanlagen sowohl Antriebe in Richtung der Achsen X, Y und Z als auch die Rotationsantriebe 14, 16, 18 ansteuern und elektrisch versorgen bzw. von diesen Antrieben Positions- bzw. Orientierungsinformationen erhalten. Ebenso können Koordinatentransformationen zwischen dem Koordinatensystem der Achsen der Antriebe und dem Koordinatensystem der vorgegebenen Bahnkontur durchgeführt werden, falls dies erforderlich ist. Auch kann die Steuerung die Zuführmenge des Klebemittels durch die Klebeanlage 30 steuern.

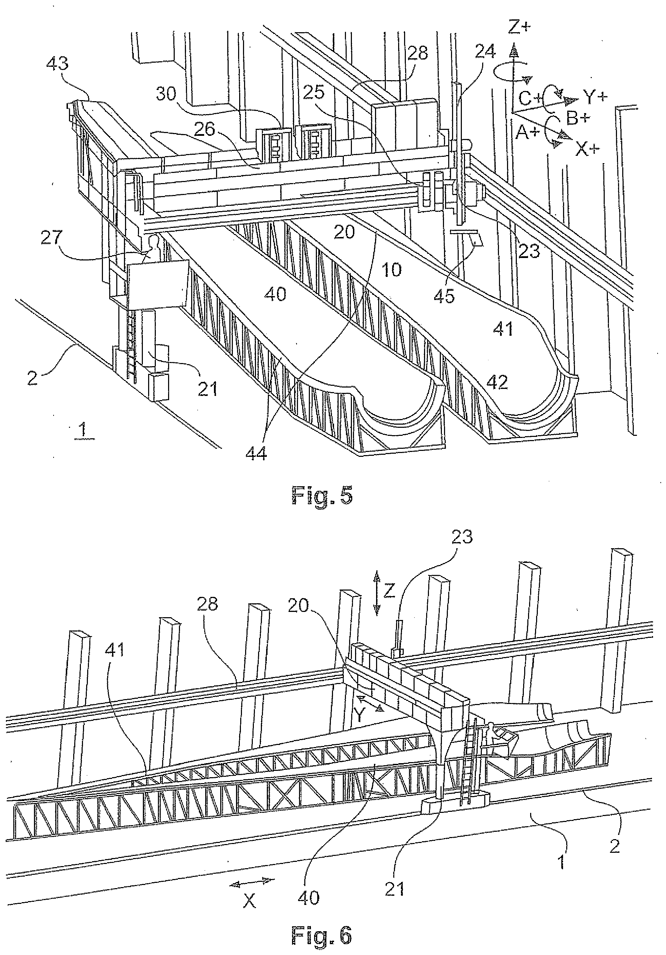

An dem Podest 26 ist seitlich, in der Darstellung der Fig. 4 auf der rechten Seite des Podests 26, ein Y-/Z-Laufwagen 23 vorgesehen. Dieser kann in der Y-Richtung verfahren (vgl. Fig. 5 bis 7). Auf der gleichen Seite des Podests 26 ist ein Bedienpodest 27 vorgesehen, von dem aus ein Bediener der Automatisierungsanlage den Klebeprozess steuern und bzw. oder überwachsen kann.

Der Y-/Z-Laufwagen 23 weist eine Z-Achse 24 auf, an deren unterem Ende die automatisierte Auftragseinheit 10 vorgesehen ist. Die Z-Achse 24 kann in Z-Richtung verfahren werden. Die Auftragseinheit 10 weist gemäß dem ersten und zweiten Ausführungsbeispiel der Fig. 2 und 3 drei Rotationsantriebe 14, 16, 18 auf, so dass die Auftragseinheit 10 mittels dieser drei linearen Achsen X, Y und Z und drei Rotationsachsen der Rotationsantriebe 14, 16, 18 in allen sechs kartesischen Freiheitsgraden positionieren und orientieren kann. Die zu beschichtende Kante 44, 45 ist unterhalb des Y-/Z-Laufwagens 23 angeordnet (vgl. Fig. 5 bis 7).

Fig. 5 zeigt eine perspektivische Darstellung des Automatisierungssystems der Fig. 4. Dargestellt sind die Elemente der Fig. 4 und weitere Elemente des Automatisierungssystems sowie zwei Rotorblatthälften 40, 41, die miteinander zu verkleben sind. So ist ein X-Balken 28 dargestellt, an dem die Y-Brücke 20 an Pfeilern oder an einer Wand einer Produktionshalle entlang in einer Richtung X verfahren kann.

Ferner sind eine Rotorblattdruckseite 40 und eine Rotorblattsaugseite 41 eines Rotorblatts einer Windenergieanlage dargestellt, die in Formen oder Schalen auf dem Untergrund 1 der Produktionshalle unterhalb der Automatisierungsanlage angeordnet sind. Die Rotorblattdruckseite 40 und die Rotorblattsaugseite 41 weisen jeweils einen Rotorblattflansch 42 an ihrem unteren Ende, ein Rotorblatttip 43 an ihrer Spitze, eine Endkante 44 und eine Nasenseite 45 auf. Die Endkante 44 und die Nasenkante 45 sind jeweils mit Klebemittel zu beschichten, um die beiden Rotorblatthälften 40, 41 zusammen zu kleben. Im Inneren der Rotorblatthälften 40, 41 sind zur Stabilisierung des fertigen Rotorblatts Stege vorgesehen (nicht dargestellt), die ebenfalls mit Klebemittel beschichtet und miteinander verklebt werden.

Fig. 6 zeigt eine weitere perspektivische Darstellung des Automatisierungssystems gemäß Fig. 4.

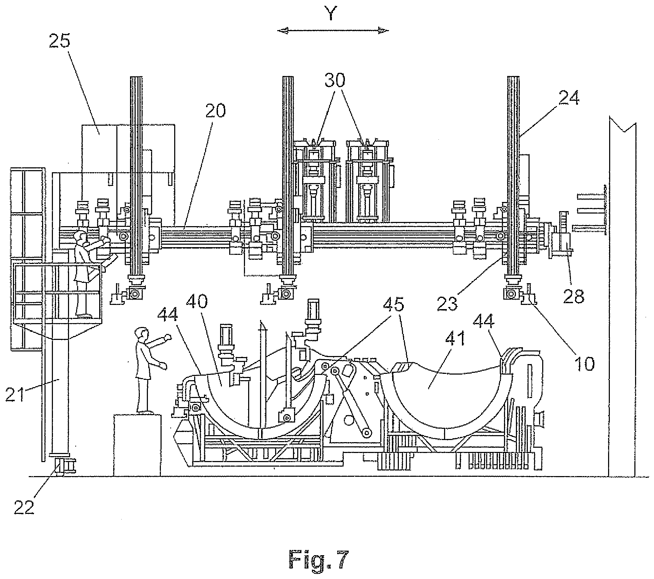

Fig. 7 zeigt eine seitliche Darstellung des Automatisierungssystems gemäß Fig. 4.

Zur Fertigung eines Rotorblatts einer Windenergieanlage werden zwei Rotorblatthälften 40, 41 in Formen oder Schalen mittels GFK-Matten, in Composite-Bauweise oder auch durch die Verwendung von Schaum und Balsaholz hergestellt. Während der entsprechenden Herstellungsschritte, bei den z.B. zum Einbringen der GFK-Matten in die Formen der Hallenkran genutzt wird, ist das Automatisierungssystem zum Verkleben nicht erforderlich und darüber hinaus eher hinderlich, so dass das Automatisierungssystem außerhalb des Bereichs der Formen zu positionieren ist.

Sind die beiden Rotorblatthälften fertiggestellt, kann der Hallenkran aus dem Bereich der Formen entfernt werden, soweit er das Automatisierungssystem behindern würde. Dann kann der Anfangspunkt der abzufahrenden Trajektorie zum Auftragen des Klebemittels auf die jeweilige Endkante 44 und Nasenseite 45 der beiden Rotorblatthälften 40, 41 von dem Automatisierungssystem angefahren werden. Dabei beinhaltet die abzufahrende Trajektorie sowohl die abzufahrende Bahnkontur als auch die entsprechenden Zeitpunkte eines jeden Punktes der Bahnkontur, so dass durch die Vorgabe der abzufahrenden Trajektorie sowohl die Bahnkontur als auch die Verfahrgeschwindigkeit über diese Bahnkontur der Steuerung des Automatisierungssystems bekannt sind. Hierdurch kann in Abhängigkeit der Kontur des Auftragsprofils 11 der Auftragseinheit 10 und durch Vorgabe der Zuführmenge des Klebemittels die Dicke, d.h. Höhe, der aufzutragenden Kleberaupe vorgegeben werden.

Von dem Anfangspunkt der Trajektorie an kann das automatisierte Auftragen der Kleberaupe durch das Automatisierungssystem erfolgen. Wird hierbei eine Auftragseinheit 10 gemäß dem ersten Ausführungsbeispiel verwendet, erfolgt das Auftragen entlang der vorgegebenen Bahnkontur. Wird eine Auftragseinheit 10 gemäß dem zweiten Ausführungsbeispiel verwendet, wird die Bahnkontur kontinuierlich mittels der Sensoreinheit 13 durch Erkennen der jeweiligen Endkante 44 und Nasenseite 45 überwacht und Abweichungen zwischen der vorgegebenen Bahnkontur und der erkannten jeweiligen Endkante 44 und Nasenseite 45 durch die Steuerung des Automatisierungssystems korrigiert.

Nach dem Abfahren der Trajektorie wird das Automatisierungssystem aus dem Bereich der Formen heraus verfahren und die beiden Rotorblatthälften 40, 41 können durch zusammenführen der Formen miteinander verklebt werden. Während dessen kann z.B. die Klebemittelmenge der Klebeanlage 30 erneut aufgefüllt oder ausgetauscht werden. Auch kann in dieser Zeit eine Reinigung oder Wartung des Automatisierungssystems vorgenommen werden, ohne dass der Produktionsprozess unterbrochen wird, da in dieser Zeit das Automatisierungssystem nicht zum Auftragen von Klebemittel eingesetzt wird. Auch kann das Auftragsprofil 11 der Auftragseinheit 10 ausgetauscht werden, um als nächstes eine Kleberaupe mit einem anderen Profi! aufzutragen.

Wird das Automatisierungssystem in einer Fertigung eingesetzt, in der mehrere Rotorblätter parallel gefertigt werden, kann das Automatisierungssystem auch nach dem Auftragen einer Kleberaupe auf einem ersten Paar von Rotorblatthälften 40, 41 zu einem weiteren Paar von Rotorblatthälften 40, 41 verfahren und dort erneut das zuvor beschriebene Verfahren zum automatisierten Auftragen einer Kleberaupe durchführen. Maßnahmen zum Auffüllen der Klebemenge, des Wartens und Umrüsten können dabei je nach Produktionsablauf zwischen das Abfahren einer Auftragstrajektorie vorgesehen werden, um einen ununterbrochenen und zeitlich optimierten Produktionsablauf zu erreichen.

## Patentansprüche

1. Automatisierungsvorrichtung zum Fertigen eines Rotorblatts einer Windenergieanlage, mit
einer Auftragsvorrichtung zum Auftragen von Klebemittel auf eine mit Klebemittel zu versehende Oberfläche (44, 45) einer Rotorblatthälfte (40, 41), wobei die Auftragsvorrichtung aufweist:
eine Auftragseinheit (10), welche eingerichtet ist, über die mit Klebemittel zu versehende Oberfläche (44, 45) geführt zu werden und bei der Bewegung auf der Oberfläche (44, 45) das Klebemittel aufzutragen, und
eine Zuführeinheit, welche eingerichtet ist, Klebemittel in einen Raum zuzuführen, der im Wesentlichen durch die Auftragseinheit (10) und die mit Klebemittel zu versehende Oberfläche (44, 45) begrenzt wird,
wobei die Auftragseinheit (10) eine Seite (11) mit einer Öffnung aufweist und die Öffnung derart ausgestaltet ist, um dem auf der Oberfläche (44, 45) aufgetragenen Klebemittel eine vorbestimmte Kontur zu geben, und
Vorrichtungen (14, 16, 18, 22, 23, 24) zum Positionieren und/oder Orientieren der Auftragsvorrichtung zum Auftragen von Klebemittel zu der mit Klebemittel zu versehenden Oberfläche (44, 45),
ferner mit
einer Sensoreinheit (13), die eingerichtet ist, seitliche Begrenzungen der mit Klebemittel zu versehenden Oberfläche (44, 45) zu erkennen,
wobei die Automatisierungsvorrichtung ein Portalroboter oder eine Automatisierungsvorrichtung in Portalbauweise ist, welche eingerichtet ist, in Längsrichtung (X) über die Rotorblatthälfte (40, 41) zu verfahren.

2. Automatisierungsvorrichtung nach Anspruch 1,
wobei die Seite (11) mit der Öffnung eingerichtet ist, ausgewechselt zu werden.

3. Automatisierungsvorrichtung nach Anspruch 1 oder 2,
wobei die Öffnung der Seite (11) derart ausgestaltet ist, dass durch die Kontur der Öffnung der Seite (11) die Kontur, insbesondere Höhe, des aufgetragenen Klebemittels bestimmt wird.

4. Automatisierungsvorrichtung nach einem der vorherigen Ansprüche, mit
einer Klebemitteleinheit (30), welche eingerichtet ist, das Klebemittel der Auftragseinheit (10) zuzuführen.

5. Automatisierungsvorrichtung nach Anspruch 4,
wobei die Klebemitteleinheit (30) eingerichtet ist, die Menge des zugeführten Klebemittels pro Zeit vorzugeben.

6. Automatisierungsvorrichtung nach Anspruch 1,
wobei die Sensoreinheit (13) Mittel aufweist, den Abstand zwischen der Auftragseinheit (10) und der mit Klebemittel zu versehenden Oberfläche (44, 45) zu erkennen.

7. Automatisierungsvorrichtung nach einem der vorherigen Ansprüche,
wobei die Trajektorie der Auftragseinheit (10) über die mit Klebemittel zu versehende Oberfläche (44, 45) und die Menge des zugeführten Klebemittels pro Zeit derart vorgesehen ist, eine vorbestimmte Menge von Klebemittel auf jeden Abschnitt der mit Klebemittel zu versehenden Oberfläche (44, 45) aufzutragen.

8. Automatisierungsvorrichtung nach einem der vorherigen Ansprüche,
wobei die Menge des auf jeden Abschnitt der mit Klebemittel zu versehenden Oberfläche (44, 45) aufgetragenen Klebemittels gespeichert wird.

9. Automatisierungsvorrichtung nach einem der vorherigen Ansprüche,
wobei die Automatisierungsvorrichtung eingerichtet ist, auf einer Mehrzahl von Objekten, die jeweils wenigstens eine mit Klebemittel zu versehende Oberfläche (44, 45) aufweisen, Klebemittel aufzutragen.

10. Verfahren zum Fertigen eines Rotorblatts einer Windenergieanlage, mit den Schritten:
Positionieren einer Auftragseinheit (10) über einer mit Klebemittel zu versehenden Oberfläche (44, 45) einer Rotorblatthälfte (40, 41), wobei die Auftragseinheit (10) eine Seite (11) mit einer Öffnung aufweist und die Öffnung derart ausgestaltet ist, um dem auf der Oberfläche (44, 45) der Rotorblatthälfte (40, 41) aufgetragenen Klebemittel eine vorbestimmte Kontur zu geben,
Zuführen von Klebemittel in einen Raum, der im Wesentlichen durch die Auftragseinheit (10) und die mit Klebemittel zu versehende Oberfläche (44, 45) der Rotorblatthälfte (40, 41) begrenzt wird, und
Erkennen von seitlichen Begrenzungen der mit Klebemittel zu versehenden Oberfläche (44, 45) mittels einer Sensoreinheit (13),
Führen der Auftragseinheit (10) über die mit Klebemittel zu versehenden Oberfläche (44, 45) der Rotorblatthälfte (40, 41), so dass das Klebemittel auf der Oberfläche (44, 45) der Rotorblatthälfte (40, 41) mit der vorbestimmten Kontur aufgetragen wird, die durch die Öffnung der Seite (11) der Auftragseinheit (10) vorgegeben ist.

11. Verfahren nach Anspruch 10,
wobei die Auftragseinheit (10) durch Vorrichtungen (14, 16, 18, 22, 23, 24) zum Positionieren und/oder Orientieren der Auftragseinheit (10) über die mit Klebemittel zu versehende Oberfläche (44, 45) der Rotorblatthälfte (40, 41) geführt wird.

## Claims

1. Automation device for producing a rotor blade of a wind turbine, having
an application device for applying adhesive to a surface (44, 45) of a rotor blade half (40, 41) which is intended to be provided with adhesive, wherein the application device has:
an application unit (10) which is configured to be guided over the surface (44, 45) which is intended to be provided with adhesive and to apply the adhesive during the movement on the surface (44, 45), and
a supply unit which is configured to supply adhesive to a space which is delimited substantially by the application unit (10) and the surface (44, 45) which is intended to be provided with adhesive,
wherein the application unit (10) has a side (11) having an opening and the opening is configured so as to give the adhesive which is applied to the surface (44, 45) a predetermined contour, and
devices (14, 16, 18, 22, 23, 24) for positioning and/or orientating the application device for applying adhesive relative to the surface (44, 45) which is intended to be provided with adhesive,
further having
a sensor unit (13) which is configured to identify lateral delimitations of the surface (44, 45) which is intended to be provided with adhesive,
wherein the automation device is a gantry robot or an automation device with a gantry construction which is configured to move in the longitudinal direction (X) over the rotor blade half (40, 41).

2. Automation device according to claim 1,
wherein the side (11) with the opening is configured to be replaced.

3. Automation device according to claim 1 or 2,
wherein the opening of the side (11) is configured in such a manner that the contour, in particular height, of the applied adhesive is determined by the contour of the opening of the side (11).

4. Automation device according to any one of the preceding claims, having an adhesive unit (30) which is configured to supply adhesive to the application unit (10).

5. Automation device according to claim 4,
wherein the adhesive unit (30) is configured to predetermine the quantity of the adhesive supplied per time.

6. Automation device according to claim 1,
wherein the sensor unit (13) has means for identifying the spacing between the application unit (10) and the surface (44, 45) which is intended to be provided with adhesive.

7. Automation device according to any one of the preceding claims,
wherein the trajectory of the application unit (10) over the surface (44, 45) which is intended to be provided with adhesive and the quantity of the adhesive supplied per time is provided so as to apply a predetermined quantity of adhesive to each portion of the surface (44, 45) which is intended to be provided with adhesive.

8. Automation device according to any one of the preceding claims,
wherein the quantity of the adhesive which is applied to each portion of the surface (44, 45) which is intended to be provided with adhesive is stored.

9. Automation device according to any one of the preceding claims,
wherein the automation device is configured to apply adhesive to a plurality of objects which each have at least one surface (44, 45) which is intended to be provided with adhesive.

10. Method for producing a rotor blade of a wind turbine, having the steps of:
positioning an application unit (10) over a surface (44, 45) of a rotor blade half (40, 41) which is intended to be provided with adhesive, wherein the application unit (10) has a side (11) having an opening and the opening is configured so as to give the adhesive which is applied to the surface (44, 45) of the rotor blade half (40, 41) a predetermined contour,
supplying adhesive to a space which is delimited substantially by the application unit (10) and the surface (44, 45) of the rotor blade half (40, 41) which is intended to be provided with adhesive, and
identifying lateral boundaries of the surface (44, 45) which is intended to be provided with adhesive by means of a sensor unit (13),
guiding the application unit (10) over the surface (44, 45) of the rotor blade half (40, 41) which is intended to be provided with adhesive so that the adhesive is applied to the surface (44, 45) of the rotor blade half (40, 41) with the predetermined contour which is predetermined by the opening of the side (11) of the application unit (10).

11. Method according to claim 10,
wherein the application unit (10) is guided by devices (14, 16, 18, 22, 23, 24) for positioning and/or orientating the application unit (10) over the surface (44, 45) of the rotor blade half (40, 41) which is intended to be provided with adhesive.

## Revendications

1. Dispositif d'automatisation servant à fabriquer une pale de rotor d'une éolienne, avec
un dispositif d'application servant à appliquer de la colle sur une surface (44, 45) à revêtir de colle d'une moitié de pale de rotor (40, 41), dans lequel le dispositif d'application présente :
une unité d'application (10), qui est mise au point pour être guidée au-dessus de la surface (44, 45) à revêtir de colle et pour appliquer la colle lors du déplacement sur la surface (44, 45), et
une unité d'amenée, qui est mise au point pour amener de la colle dans un espace, qui est délimité sensiblement par l'unité d'application (10) et la surface (44, 45) à revêtir de colle,
dans lequel l'unité d'application (10) présente un côté (11) avec une ouverture et l'ouverture est configurée de manière à donner un contour prédéfini à la colle appliquée sur la surface (44, 45), et
des dispositifs (14, 16, 18, 22, 23, 24) servant à positionner et/ou orienter le dispositif d'application servant à appliquer de la colle vers la surface (44, 45) à revêtir de colle,
avec en outre
une unité de capteur (13), qui est mise au point pour identifier des délimitations latérales de la surface (44, 45) à revêtir de colle,
dans lequel le dispositif d'automatisation est un robot portique ou un dispositif d'automatisation de type portique, qui est mis au point pour être déplacé dans la direction longitudinale (X) au-dessus de la moitié de pale de rotor (40, 41).

2. Dispositif d'automatisation selon la revendication 1,
dans lequel le côté (11) avec l'ouverture est mis au point pour être remplacé.

3. Dispositif d'automatisation selon la revendication 1 ou 2,
dans lequel l'ouverture du côté (11) est configurée de telle manière que le contour, en particulier la hauteur, de la colle appliquée est défini par le contour de l'ouverture du côté (11).

4. Dispositif d'automatisation selon l'une quelconque des revendications précédentes, avec
une unité à colle (30), qui est mise au point pour amener la colle à l'unité d'application (10).

5. Dispositif d'automatisation selon la revendication 4,
dans lequel l'unité à colle (30) est mise au point pour spécifier la quantité de la colle amenée par unité de temps.

6. Dispositif d'automatisation selon la revendication 1,
dans lequel l'unité de capteur (13) présente des moyens pour identifier la distance entre l'unité d'application (10) et la surface (44, 45) à revêtir de colle.

7. Dispositif d'automatisation selon l'une quelconque des revendications précédentes,
dans lequel la trajectoire de l'unité d'application (10) au-dessus de la surface (44, 45) à revêtir de colle et la quantité de la colle amenée par unité de temps sont prévues de manière à appliquer une quantité prédéfinie de colle sur chaque section de la surface (44, 45) à revêtir de colle.

8. Dispositif d'automatisation selon l'une quelconque des revendications précédentes,
dans lequel la quantité de la colle appliquée sur chaque section de la surface (44, 45) à revêtir de colle est mémorisée.

9. Dispositif d'automatisation selon l'une quelconque des revendications précédentes,
dans lequel le dispositif d'automatisation est mis au point pour appliquer de la colle sur une multitude d'objets, qui présentent respectivement au moins une surface (44, 45) à revêtir de colle.

10. Procédé servant à fabriquer une pale de rotor d'une éolienne, avec les étapes :
de positionnement d'une unité d'application (10) au-dessus de la surface (44, 45) à revêtir de colle d'une moitié de pale de rotor (40, 41), dans lequel l'unité d'application (10) présente un côté (11) avec une ouverture et l'ouverture est configurée de manière à donner un contour prédéfini à la colle appliquée sur la surface (44, 45) de la moitié de pale de rotor (40, 41),
d'amenée de colle dans un espace, qui est délimité sensiblement par l'unité d'application (10) et la surface (44, 45) à revêtir de colle de la moitié de pale de rotor (40, 41), et
d'identification de délimitations latérales de la surface (44, 45) à revêtir de colle au moyen d'une unité de capteur (13),
de guidage de l'unité d'application (10) au-dessus de la surface (44, 45) à revêtir de colle de la moitié de pale de rotor (40, 41) si bien que la colle est appliquée sur la surface (44, 45) de la moitié de pale de rotor (40, 41) avec le contour prédéfini, qui est spécifié par l'ouverture du côté (11) de l'unité d'application (10).

11. Procédé selon la revendication 10,
dans lequel l'unité d'application (10) est guidée par des dispositifs (14, 16, 18, 22, 23, 24) servant à positionner et/ou orienter l'unité d'application (10) au-dessus de la surface (44, 45) à revêtir de colle de la moitié de pale de rotor (40, 41).
